# EUROPÄISCHE PATENTANMELDUNG

(11) **EP 1 457 777 A1**
(43) Veröffentlichungstag der Anmeldung: **15.09.2004**
(21) Anmeldenummer: 03005662.6
(22) Anmeldetag: 13.03.2003
(51) Int. Cl.: G01N 33/20, G01N 25/72, B29C 39/38, B29C 39/44

(54) **Verfahren und Vorrichtung zur Fertigung eines Gussteils mit definierter Oberfläche**

(71) Anmelder: Powitec Intelligent Technologies GmbH, 45219 Essen (DE)
(72) Erfinder: Wintrich, Franz, 45309 Essen (DE); Jensen, Manuela Ulrike, 73230 Kircheim/Teck (DE)
(74) Vertreter: Patentanwälte Hosenthien-Held und Dr. Held

(57) **Zusammenfassung**

In einem Verfahren und mit einer Vorrichtung zur Durchführung des Verfahrens zur Fertigung eines Gußteils (1) mit definierter Oberfläche (4), bei dem eine Seite (3) des Gußteils (1) spanabhebend bearbeitet wird, wird vor der spanabhebenden Bearbeitung die Strahlung insbesondere Infrarotstrahlung der Seite (3) aufgenommen und ausgewertet. Vorzugsweise wird die Strahlung ortsaufgelöst oder zeitaufgelöst aufgenommen. Bei der bevorzugten Aufnahme des Gußteils (1) mit sich ändern der Temperatur kann das Gußteil (1) während der Aufnahme der Strahlung abgekühlt oder erwärmt werden. Die Vorrichtung weist einen Meßbereich (M) mit einer Kamera (K), einer der Kamera (K) nachgeschalteten Auswerteeinrichtung (C) und einer hinter dem Meßbereich (M) angeordneten Bearbeitungsbereich (B) auf.

## Beschreibung

Die Erfindung betrifft ein Verfahren zur Fertigung eines Gußteils mit definierter Oberfläche mit den Merkmalen des Oberbegriffs des Anspruches 1.

In verschiedenen technischen Bereichen werden Gußteile aus Gußeisen eingesetzt, bei denen eine oder mehrere Flächen in Hinblick auf eine geringe Oberflächenrauhigkeit nachbearbeitet werden, beispielsweise um definierte Anschlagflächen oder Befestigungsflächen zur Verfügung zu haben. Bei einem bekannten Verfahren dieser Art wird die zu bearbeitende Seite nach dem Abkühlen spanabhebend bearbeitet. Sofern während des Gießprozesses oder während des Abkühlens Unregelmäßigkeiten im Bereich der zu bearbeitenden Seite entstanden sind, werden diese im ungünstigsten Fall beim letzten Spanabhebevorgang erkannt. Das Gußteil wird dann in einer sehr späten Phase des Fertigungsprozesses zum Ausschuß, was kostenmäßig sehr ungünstig ist.

Der vorliegenden Erfindung liegt die Aufgabe zugrunde, ein Verfahren der eingangs genannten Art zu verbessern. Diese Aufgabe wird durch ein Verfahren mit den Merkmalen des Anspruches 1 gelöst. Weitere vorteilhafte Ausgestaltungen sind Gegenstand der Unteransprüche.

Dadurch, daß vor der spanabhebenden Bearbeitung die Strahlung der Seite aufgenommen und ausgewertet wird, können in einer sehr frühen Phase des Fertigungsablaufs Abweichungen erkannt werden, welche auf Unregelmäßigkeit im Bereich der zu bearbeitenden Seite hindeuten. Die Aufnahme erfolgt vorzugsweise mit einer Kamera, die im Infrarotbereich empfindlich ist. Vorzugsweise wird die Strahlung ortsaufgelöst aufgenommen, so daß lokale Abweichungen aufgrund von Unregelmäßigkeiten an der Oberfläche oder in einer Randschicht der Seite besser erkannt werden. So wirken beispielsweise Lunker als Isolatoren bezüglich der Wärmeleitung, was sich im lokalen Emissionsverhalten bemerkbar macht. Ferner wird die Strahlung vorzugsweise zeitaufgelöst aufgenommen, was insbesondere bei einem Gußteil mit sich ändernder Temperatur den Vorteil hat, daß in unterschiedlichen Phasen des Abkühlens oder Erwärmens unterschiedliche, einander ergänzende Informationen zur Verfügung stehen.

Bei der bevorzugten Aufnahme des Gußteils mit sich ändernder Temperatur kann das Gußteil während der Aufnahme der Strahlung abgekühlt oder erwärmt werden, wobei das Aufnehmen während des Abkühlens besser in den Fertigungsablauf integriert werden kann und allenfalls eine geringfügige Verlängerung desselben bewirkt. Je nach logistischen Umständen kann dann das Gußteil direkt nach dem Gießen oder nach Durchlaufen einer Wärmestrecke aufgenommen werden.

Entsprechend dieser Möglichkeiten weist eine Vorrichtung zur Durchführung des Verfahrens einen Meßbereich mit einer Kamera auf, der direkt nach dem Gießbereich, nach einer Wärmestrecke oder mit einer integrierten Wärmestrecke ausgebildet ist.

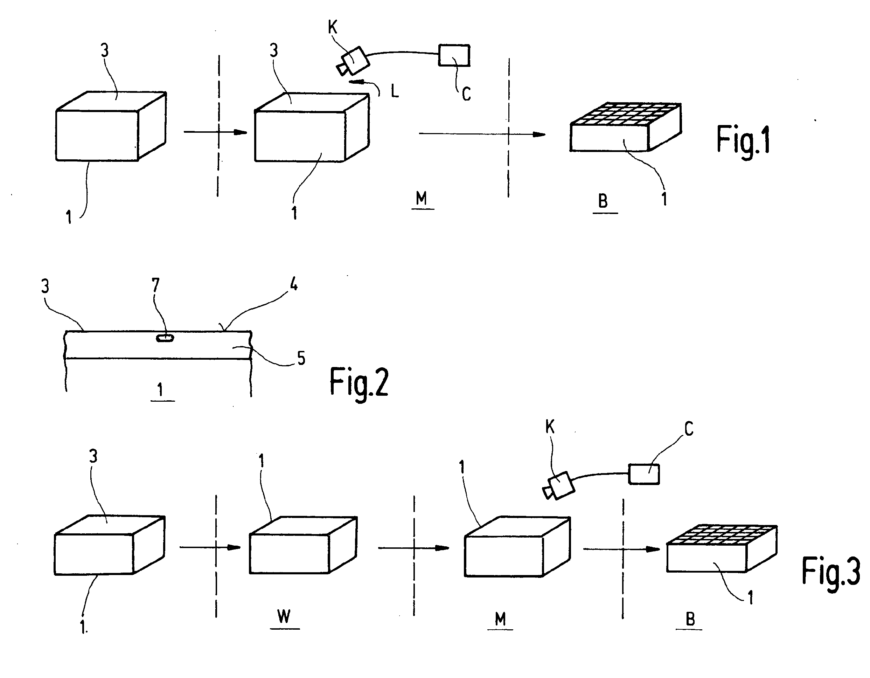

Im folgenden ist die Erfindung anhand dreier in der Zeichnung teilweise dargestellten Ausführungsbeispiele näher erläutert. Es zeigen
- Fig. 1: eine schematische Darstellung des Fertigungsablaufs gemäß einem ersten Ausführungsbeispiel,
- Fig. 2: einen nur teilweise dargestellten Schnitt durch ein Gußteil, und
- Fig. 3: eine schematische Darstellung des Fertigungsablaufs gemäß einem zweiten Ausführungsbeispiel.

Im ersten Ausführungsbeispiel wird ein Gußteil 1, das aus Gußeisen gefertigt ist, direkt nach dem Gießen, also noch im warmen Zustand, in einen Meßbereich M gebracht. Die später zu bearbeitende Seite 3 des Gußteils 1 wird von wenigstens einer Kamera K erfasst, welche die Strahlung (Emission), insbesondere die Infrarotstrahlung, der Seite 3 ortsaufgelöst und zeitaufgelöst aufnimmt. Das Gußteil 1 wird währenddessen mit einer Kühlluft L beaufschlagt, so daß die Seite 3 abkühlt. Sofern die Seite 3 an ihrer Oberfläche 4 oder in einer kleinen Randschicht 5 unter der Oberfläche 4 eine Unregelmäßigkeit 7, wie beispielsweise Lunker oder dergleichen aufweist, sind die Emissionen dort lokal unterschiedlich, beispielsweise weil ein Lunker als Isolator wirkt. Die Meßtiefe, also die Dicke dieser Randschicht 5, hängt von der Temperatur, der Zufuhr der Kühlluft L, der Meßgenauigkeit der Kamera K und ähnlichen Faktoren ab.

Eine der Kamera K nachgeschaltete Auswerteeinrichtung C, beispielsweise ein Computer mit einem implementierten neuronalen Netz, kann daher aus den von der Kamera gelieferten Strahlungsdaten der Seite 3 des Gußteils 1 feststellen, ob wahrscheinlich lokal eine Unregelmäßigkeit 7 an der Oberfläche 4 oder innerhalb der Randschicht 5 vorhanden ist. Wenn die Wahrscheinlichkeit über einem bestimmten Schwellwert liegt, wird das Gußteil 1 sofort Ausschuß. Andernfalls kommt das Gußteil 1 in einen Bearbeitungsbereich B, wo durch Fräsen oder andere spanabhebende Bearbeitung die Seite 3 mehrfach bearbeitet wird, bis sie die gewünschte Höhe und Oberflächenrauhigkeit erreicht hat.

Im zweiten Ausführungsbeispiel, welches je nach baulichen und logistischen Gegebenheiten bevorzugt wird, kühlt das Gußteil 1 nach dem Gießen in bekannter Weise ab. Vor dem Meßbereich M ist eine Wärmestrecke W vorgesehen, die vom Gußteil 1 durchlaufen wird, so daß es die für die anschließenden Aufnahmen der Kamera K im Meßbereich M notwendige Temperatur erreicht hat. Ansonsten stimmt das zweite Ausführungsbeispiel mit dem ersten Ausführungsbeispiel überein.

In einem dritten Ausführungsbeispiel kühlt das Gußteil 1 nach dem Gießen ebenfalls ab und wird später auf der Wärmestrecke W erwärmt. Die Wärmestrecke W ist nun in den Meßbereich M integriert, und die Kamera 3 nimmt die Seite 3 des sich erwärmenden Gußteils 1 auf. Die Auswertung der Strahlung der Seite 3 hinsichtlich der lokalen Unregelmäßigkeiten 7 entspricht derjenigen der beiden anderen Ausführungsbeispiele.

## Patentansprüche

1. Verfahren zur Fertigung eines Gußteils (1) mit definierter Oberfläche (4), bei dem eine Seite (3) des Gußteils (1) spanabhebend bearbeitet wird, **dadurch gekennzeichnet, daß** vor der spanabhebenden Bearbeitung die Strahlung der Seite (3) aufgenommen und ausgewertet wird.

2. Verfahren nach Anspruch 1, **dadurch gekennzeichnet, daß** die Strahlung der Seite (3) ortsaufgelöst aufgenommen wird.

3. Verfahren nach Anspruch 1 oder 2, **dadurch gekennzeichnet, daß** die Strahlung der Seite (3) zeitaufgelöst aufgenommen wird.

4. Verfahren nach einem der Ansprüche 1 bis 3, **dadurch gekennzeichnet, daß** als Strahlung die Infrarotstrahlung aufgenommen wird.

5. Verfahren nach einem der Ansprüche 1 bis 4, **dadurch gekennzeichnet, daß** das Gußteil (1) während der Aufnahme der Strahlung gekühlt wird.

6. Verfahren nach Anspruch 5, **dadurch gekennzeichnet, daß** die Strahlung direkt nach dem Gießen des Gußteils (1) aufgenommen wird.

7. Verfahren nach Anspruch 5, **dadurch gekennzeichnet, daß** das Gußteil (1) gesondert erwärmt und die Strahlung direkt nach dem Erwärmen des Gußteils (1) aufgenommen wird.

8. Verfahren nach einem der Ansprüche 1 bis 4, **dadurch gekennzeichnet, daß** das Gußteil (1) während der Aufnahme der Strahlung erwärmt wird.

9. Vorrichtung zur Durchführung eines Verfahrens nach einem der vorhergehenden Ansprüche, mit einem Meßbereich (M) mit wenigstens einer Kamera (K) zur Aufnahme der Seite (3) des Gußteils (1) und einer der Kamera (K) nachgeschalteten Auswerteeinrichtung (C) und einem hinter dem Meßbereich (M) angeordneten Bearbeitungsbereich (B).

10. Vorrichtung nach Anspruch 9, **dadurch gekennzeichnet, daß** vor dem Meßbereich (M) oder innerhalb des Meßbereichs (M) eine Wärmestrecke (W) angeordnet ist.
